# EUROPÄISCHE PATENTSCHRIFT

(11) **EP 0 625 395 B1**
(45) Veröffentlichungstag und Bekanntmachung des Hinweises auf die Patenterteilung: **19.04.1995**
(21) Anmeldenummer: 93107582.4
(22) Anmeldetag: 10.05.1993
(51) Int. Cl.: B23B 51/00

(54) **Bohrwerkzeug für metallische Werkstoffe**
Boring tool for metallic materials
Outil de perçage pour matériaux métalliques

(43) Veröffentlichungstag der Anmeldung: 23.11.1994
(73) Patentinhaber: STELLRAM GmbH, D-63150 Heusenstamm (DE)
(72) Erfinder: Rödel, Holger, W-6078 Neu Isenburg (DE); Grunsky, Manfred, W-6056 Heusenstamm 2 (DE)
(74) Vertreter: Köhler, Günter, Dipl.-Ing.

(56) Entgegenhaltungen:
- DE-A- 3 204 210
- DE-U- 7 139 323

## Beschreibung

Die Erfindung bezieht sich auf ein Bohrwerkzeug für metallische Werkstoffe, mit einem Halter, der einen axialen Klemmschlitz aufweist, in den ein plattenförmiges Bohrmesser an der Grundfläche des Klemmschlitzes anliegend eingesetzt ist und mittels wenigstens eines mit einem Kopf versehenen Schraubbolzens, der in eine Bohrung im Bohrmesser und in eine Bohrung in einem Klemmschlitzschenkel eingreift, gegen die Klemmschlitzschenkel verklemmt ist, wobei die Mittelachse der Bohrung im Klemmschlitzschenkel gegenüber der Mittelachse der Bohrung des Bohrmessers versetzt ist und wenigstens einer von zwei einander zugekehrten Umfangsrändern des Schraubbolzens und der Bohrmesser-Bohrung abgeschrägt ist, und mit einem im Halter eingesetzten Zentrierstift, der in einen Zentrierschlitz in der an der Grundfläche des Klemmschlitzes anliegenden Seite des Bohrmessers eingreift, um das Bohrmesser in bezug auf die Drehachse des Halters zu zentrieren.

Bei diesem bekannten Bohrwerkzeug (DE 32 04 210 C2) muß der Toleranzbereich der Nennbreite des Zentrierschlitzes so gewählt sein, daß der Zentrierschlitz gegenüber dem Nenndurchmesser des Zentrierstiftes ein Übermaß aufweist, um den Zentrierstift in den Zentrierschlitz einführen zu können. Dies hat zur Folge, daß sich das Bohrmesser nicht genau relativ zur Drehachse des Halters bzw. Bohrwerkzeugs zentrieren läßt. Die Folge ist ein ungenauer Rundlauf des Bohrmessers, insbesondere seiner Spitze.

Der Erfindung liegt die Aufgabe zugrunde, ein Bohrwerkzeug der eingangs genannten Art anzugeben, bei dem eine genauere Zentrierung des Bohrmessers möglich ist.

Erfindungsgemäß ist diese Aufgabe bei einem Bohrwerkzeug der eingangs genannten Art dadurch gelöst, daß die Nennbreite des Zentrierschlitzes größer als die des in den Zentrierschlitz eingreifenden Abschnitts des Zentrierstiftes gewählt ist und daß die Richtung und Größe der Versetzung der Mittelachsen von Bohrmesser-Bohrung und Klemmschlitzschenkel-Bohrung so gewählt sind, daß in gespanntem Zustand des Schraubbolzens nur die eine Seitenfläche des Zentrierschlitzes in der zentrierten Lage des Bohrmessers an der einen Seite des Zentrierstiftes anliegt.

Bei dieser Ausbildung kann der Toleranzbereich der Lage der am Zentrierstift anliegenden Seitenfläche des Zentrierschlitzes beliebig klein gewählt werden, so daß eine sehr genaue Zentrierung des Bohrmessers und damit ein besserer Rundlauf, insbesondere der Bohrmesserspitze, möglich ist. Dies ergibt eine längere Standzeit des Bohrmessers.

Vorzugsweise ist dafür gesorgt, daß sich der Zentrierschlitz in Richtung der oder schräg zur Drehachse des Halters erstreckt und die Richtung der Versetzung so gewählt ist, daß das Bohrmesser in gespanntem Zustand des Schraubbolzens durch eine erste Spannkraftkomponente gegen die Grundfläche des Klemmschlitzes und durch eine zweite Spannkraftkomponente mit der einen Seitenfläche des Zentrierschlitzes gegen die eine Seite des Zentrierstiftes gedrückt wird. Diese Ausbildung gewährleistet, daß das Bohrmesser nicht nur radial fest am Zentrierstift, sondern auch axial fest am Klemmschlitzgrund anliegt, so daß auch Vibrationen des Zentriermessers bzw. Bohrwerkzeugs beim Bohren weitgehend vermieden sind.

Besonders günstig ist es, wenn die aneinander anliegenden Seitenflächen von Zentrierschlitz und Zentrierstift eben sind. Die sich berührenden Flächen unterliegen dadurch einer geringeren Flächenpressung und demzufolge einer geringeren Verformung als im Falle einer Linienberührung, was wiederum die Genauigkeit der Zentrierung steigert.

Sodann kann dafür gesorgt sein, daß der Zentrierstift den Klemmschlitz und den Zentrierschlitz durchsetzt und mit beiden Enden in Bohrungen der Klemmschlitzschenkel eingreift. Bei dieser Ausbildung wird der Zentrierstift an seinen beiden Enden radial abgestütz. Er kann sich daher im Vergleich zu einer einseitigen Lagerung weniger leicht verbiegen. Dies trägt ebenfalls dazu bei, die Genauigkeit der Zentrierung zu steigern.

Die Erfindung und ihre Weiterbildungen werden nachstehend anhand der Zeichnung von Ausführungsbeispielen näher beschrieben. Es zeigen:
Fig. 1 eine Explosionsdarstellung des einen Endteils eines erfindungsgemäßen Bohrwerkzeugs,
Fig. 2 eine Draufsicht des einen Endteils des Bohrwerkzeugs nach Fig. 1 im zusammengesetzten und teilweise aufgebrochenen Zustand,
Fig. 3 einen Teil des Schnitts III-III der Fig. 2,
Fig. 4 den Schnitt IV-IV der Fig. 2,
Fig. 5 eine Explosionsdarstellung des einen Endteils eines zweiten Ausführungsbeispiels eines erfindungsgemäßen Bohrwerkzeugs,
Fig. 6 eine Draufsicht auf den Endteil nach Fig. 5 im zusammengesetzten und teilweise aufgebrochenen Zustand,
Fig. 7 einen Teil des Schnitts VII-VII der Fig. 6,
Fig. 8 den Schnitt VIII-VIII der Fig. 6,
Fig. 9 eine Seitenansicht des Endteils nach Fig. 6,
Fig. 10 eine Explosionsdarstellung des einen Endteils eines dritten Ausführungsbeispiels eines erfindungsgemäßen Bohrwerkzeugs,
Fig. 11 eine Draufsicht des Endteils nach Fig. 10 im zusammengesetzten und teilweise aufgebrochenen Zustand,
Fig. 12 einen Teil des Schnitts XII-XII der Fig. 11,
Fig. 13 den Schnitt XIII-XIII der Fig. 11,
Fig. 14 eine Explosionsdarstellung des einen Endteils eines vierten Ausführungsbeispiels eines erfindungsgemäßen Bohrwerkzeugs,
Fig. 15 eine Draufsicht auf den Endteil nach Fig. 14 im zusammengesetzten und teilweise aufgebrochenen Zustand,
Fig. 16 einen Teil des Schnitts XVI-XVI der Fig. 15,
Fig. 17 den Schnitt XVII-XVII der Fig. 15,
Fig. 18 eine Seitenansicht des Endteils nach Fig. 15,
Fig. 19 eine Explosionsdarstellung des einen Endteils eines fünften Ausführungsbeispiels eines erfindungsgemäßen Bohrwerkzeugs,
Fig. 20 eine Draufsicht auf den Endteil nach Fig. 19 im zusammengesetzten und teilweise aufgebrochenen Zustand,
Fig. 21 einen Teil des Schnitts XXI-XXI der Fig. 20
Fig. 22 den Schnitt XXII-XXII der Fig. 20,
Fig. 23 eine Seitenansicht des Endteils nach Fig. 20,
Fig. 24 eine Explosionsdarstellung des einen Endteils eines sechsten Ausführungsbeispiels eines erfindungsgemäßen Bohrwerkzeugs,
Fig. 25 eine Draufsicht auf den Endteil nach Fig. 24 im zusammengesetzten und teilweise aufgebrochenen Zustand,
Fig. 26 den Schnitt XXVI-XXVI der Fig. 25 und
Fig. 27 eine Seitenansicht des Endteils nach Fig. 25.

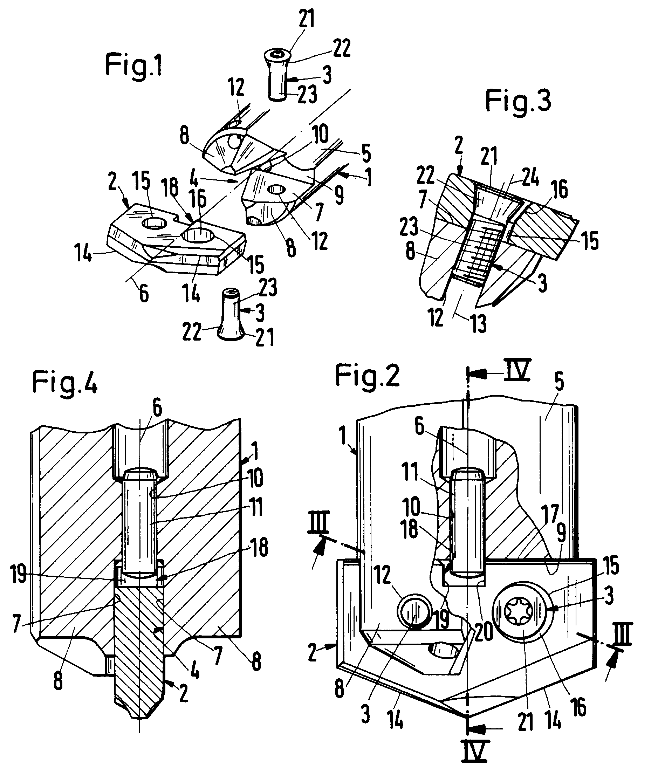

Das Bohrwerkzeug nach den Fig. 1 bis 4 umfaßt einen Halter 1, ein Bohrmesser 2 und zwei Schraubbolzen 3 in Form von Kopfschrauben.

Der nicht dargestellte Endteil des Haltes 1 wird in eine Bohrmaschine eingespannt. Der dargestellte Endteil hat einen Klemmschlitz 4 im freien Ende und zwei Spanabführungsnuten 5, die sich diametral in bezug auf die Drehachse 6 des Halters 1 bzw. Bohrwerkzeugs gegenüberliegen.

Der Klemmschlitz 4 wird durch Klemmflächen 7 von Klemmschlitzschenkeln 8 begrenzt. Die Grundfläche 9 des Klemmschlitzes 4 steht im rechten Winkel zur Drehachse 6 und den Klemmflächen 7. In einer zur Drehachse 6 koaxialen Bohrung 10 in der Grundfläche 9 des Klemmschlitzes 4 ist ein zylindrischer Zentrierstift 11 im Preßsitz eingesetzt. Jeder Klemmschlitzschenkel 8 ist mit einer Gewindebohrung 12 versehen, deren Mittelachse 13 senkrecht zu den Klemmflächen 7 steht und seitlich von der Drehachse 6 entfernt jeweils in einem der durch die Spanabführungsnuten 5 ausgesparten Bereiche des Halters 1 liegt.

Das Bohrmesser 2 hat eine im zusammengesetzten Zustand des Bohrwerkzeugs über das freie Ende des Halters 1 vorstehende Bohrspitze mit Schneidenabschnitten 14, die einen stumpfen Winkel einschließen. Beiderseits der Drehachse 6 ist jeweils eine Bohrung 15 im Bohrmesser 2 ausgebildet, deren einer Umfangsrand 16 konisch abgeschrägt ist.

Die der Bohrmesserspitze abgekehrte Fläche 17 des Bohrmessers 2 steht senkrecht zur Ebene des Bohrmessers 2 bzw. zur Drehachse 6 und dient der Anlage des Bohrmessers 2 an der Grundfläche 9 des Klemmschlitzes 4. In dieser Fläche 17 ist ein in der Draufsicht nach Fig. 2 rechtwinkliger Zentrierschlitz 18 ausgebildet, dessen Nennbreite größer als die des in den Zentrierschlitz eingreifenden Abschnitts des Zentrierstiftes 11 gewählt ist. Der Zentrierschlitz 18 liegt in der Draufsicht nach Fig. 2 exzentrisch zur Drehachse 6, wobei seine Seitenflächen 19, 20 beiderseits der Drehachse liegen. Der Zentrierschlitz 18 dient zur Aufnahme des Zentrierstiftes 11, um das Bohrmesser 2 im Halter 1 zu zentrieren.

Jeder Schraubbolzen 3 hat einen Kopf 21 mit einem unter dem gleichen Winkel wie der Umfangsrand 16 der Bohrungen 15 konisch abgeschrägten Umfangsrand 22 und einen Außengewindeschaft 23, der in jeweils eine der Gewindebohrungen 12 paßt. Die Mittelachse 24 der in Fig. 2 rechten Bohrung 15 bzw. ihres Umfangsrandes 16 und die Mittelachse 13 der zugehörigen Klemmschlitzschenkel-Bohrung 12 liegen in einer Querebene des Halters 1, die mit der Ebene des Schnitts III-III zusammenfällt und mit der Drehachse auf seiten der Spitze des Bohrmessers 2 einen spitzen Winkel einschließt, wobei die Mittelachsen 13 und 24 in der erwähnten Querebene zueinander versetzt sind, so daß die Mittelachse 24 der Bohrung 15 des Bohrmessers 2 bzw. ihr Umfangsrand 16 einen etwas größeren Abstand von der Grundfläche 9 des Klemmschlitzes 4 und von der Drehachse 6 als die Mittelachse 13 der in dem in Fig. 2 rechten Klemmschlitzschenkel 8 ausgebildeten Gewindebohrung 12 hat.

Die Mittelachsen der in den Fig. 1 und 2 linken Bohrungen 12 und 15 liegen dagegen in einer zur Ebene des Schnitts III-III parallelen Ebene, wobei ihre Abstände zur Grundfläche 9 und Drehachse 6 umgekehrt als bei den in Fig. 3 dargestellten Mittelachsen 13 und 24 der in den Fig. 1 und 2 rechten Bohrungen 12 und 15 sind. Die Richtung und Größe der Versetzung der Mittelachsen 13 und 24 sind dabei so gewählt, daß im gespannten Zustand der Schraubbolzen 3 nur die eine Seitenfläche 20 des Zentrierschlitzes 18 in der zentrierten Lage des Bohrmessers 2 an der einen Seite des Zentrierstiftes 11 anliegt, wie es in Fig. 2 dargestellt ist. Diese Ausbildung hat den Vorteil, daß die Lage der beim Spannen der Schraubbolzen 3 mit dem Zentrierstift 11 zur Anlage kommende Seitenfläche 20 des Zentrierschlitzes 18 eine sehr eng bemessene Toleranz aufweisen kann, so daß das Bohrmesser so genau wie möglich zentriert wird, was den Rundlauf des Bohrmessers 2, insbesondere seiner Spitze, verbessert und die Standzeit des Bohrmessers 2 verlängert. Gleichzeitig üben die Schraubbolzen 3 mit ihren Köpfen 21 eine erste Spannkraftkomponente gegen die Grundfläche 9 des Klemmschlitzes 4 und eine zweite Spannkraftkomponente mit der einen Seitenfläche 20 des Zentrierschlitzes 18 gegen die eine Seite des Zentrierstiftes 11 aus. Das Bohrmesser 2 wird daher axial fest gegen die Grundfläche 9 des Klemmschlitzes 4 und radial gegen den Zentrierstift 11 gedrückt. Das Bohrmesser 2 ist somit in besonders hohem Maße gegen Vibrationen beim Bohren gesichert.

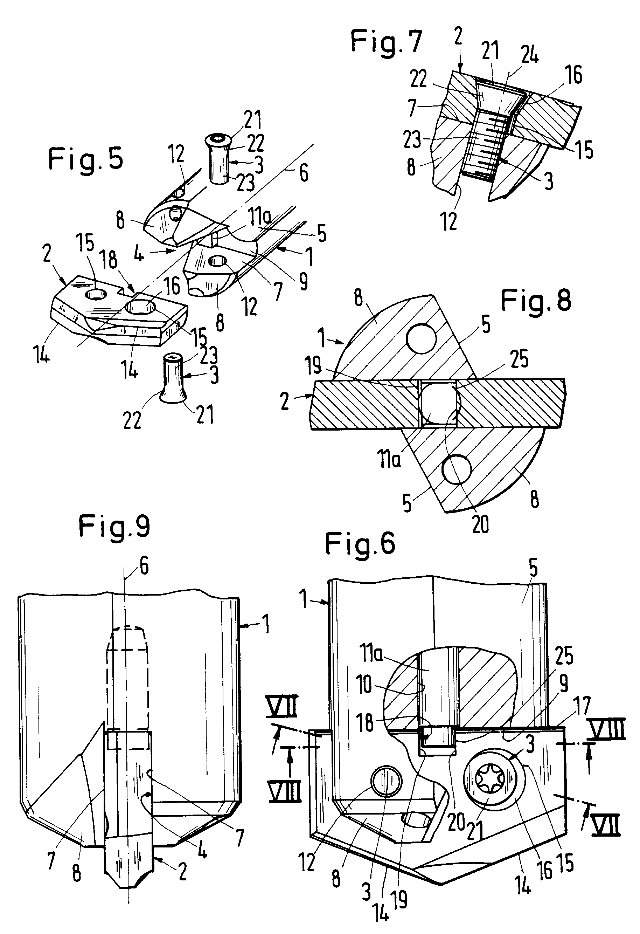

Das zweite Ausführungsbeispiel nach den Fig. 5 bis 9 unterscheidet sich von dem ersten Ausführungsbeispiel nach den Fig. 1 bis 4 lediglich dadurch, daß der in den Zentrierschlitz 18 eingreifende Abschnitt des Zentrierstiftes 11a als Vierkant ausgebildet ist (siehe insbesondere Fig. 5 und 8), so daß die aneinander anliegenden Seitenflächen 20 und 25 von Zentrierschlitz 18 und Zentrierschlitz 11a eben sind und mithin großflächig aneinander anliegen und einer geringeren Verformung als im Falle der Linienberührung bei dem ersten Ausführungsbeispiel ausgesetzt sind. Dies trägt zur weiteren Steigerung der Zentriergenauigkeit bei.

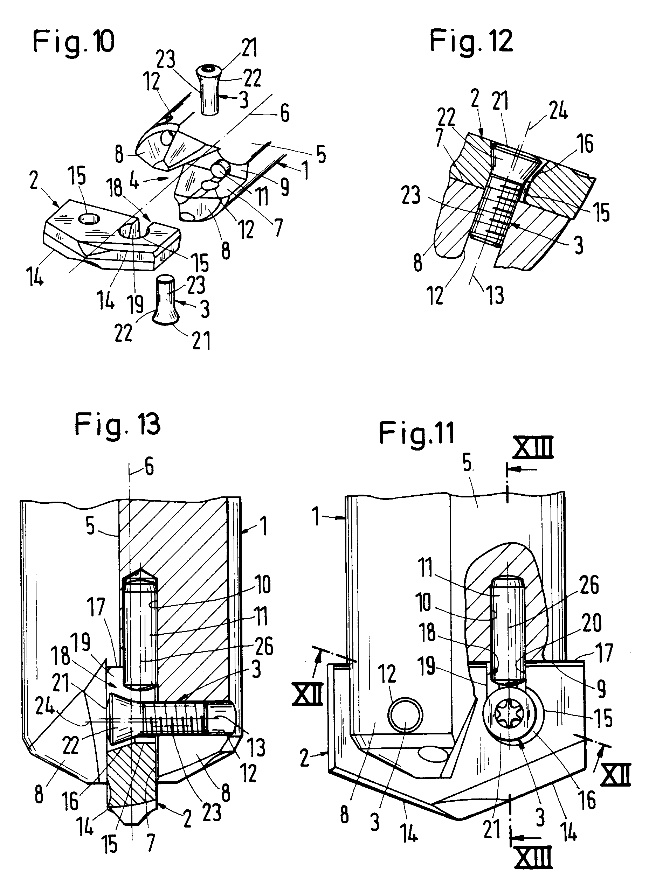

Das dritte Ausführungsbeispiel nach den Fig. 10 bis 13 unterscheidet sich von dem ersten Ausführungsbeispiel nur dadurch, daß die Bohrung 10 nicht koaxial zur Drehachse 6, sondern seitlich gegenüber dieser so weit versetzt ist, daß ihre Mittelachse 26 die Mittelachse 13 der einen (in den Fig. 10 und 11 rechten) Gewindebohrung 12 kreuzt und der Zentrierschlitz 18 zu der einen (in den Fig. 10 und 11 rechten) Bohrung 15 des Bohrmessers 2 durchgehend ausgebildet ist, wobei der Zentrierschlitz 18 nicht nur breiter als der Zentrierstift 11, sondern auch etwas breiter als der Durchmesser des Gewindeschafts 23 des Schraubbolzens 3 ist. Diese Ausbildung hat den Vorteil, daß der eine (in den Fig. 10 und 11 rechte) Schraubbolzen 3 zum Auswechseln des Bohrmessers nicht vollständig aus seinem Klemmschlitzschenkel 8 herausgeschraubt zu werden braucht.

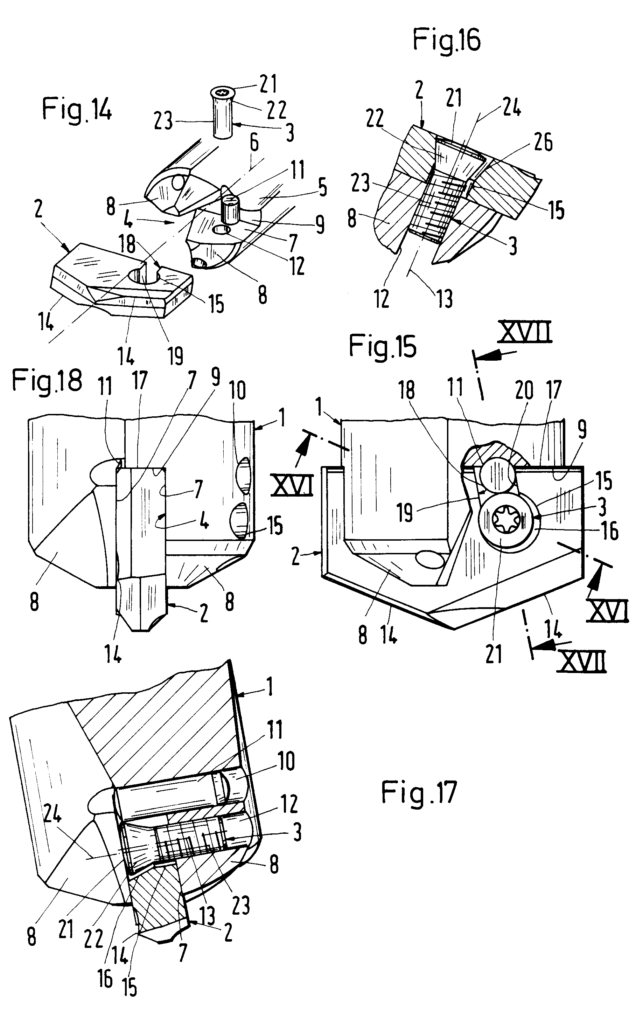

Das vierte Ausführungsbeispiel nach den Fig. 14 bis 18 unterscheidet sich von dem dritten Ausführungsbeispiel nach den Fig. 10 bis 13 im wesentlichen nur dadurch, daß das Bohrmesser 2 nur eine Bohrung 15 aufweist und auch nur der eine Klemmschlitzschenkel 8 mit einer Gewindebohrung 12 versehen ist. Dementsprechend ist auch nur ein Schraubbolzen 3 vorgesehen. Ferner erstreckt sich die Bohrung 10 zur Aufnahme des Zentrierstiftes 11 senkrecht zur Klemmfläche 7 des einen Klemmschlitzschenkels 8 und durch diesen Klemmschlitzschenkel 8 hindurch. Zum Teil durchsetzt die Bohrung 10 auch die eine Spanabführungsnut 5. Sodann erstreckt sich der Zentrierschlitz 18 schräg zur Drehachse 6, wobei er auf seiten der Bohrmesserspitze einen spitzen Winkel mit der Drehachse 6 einschließt. Auch bei diesem Ausführungsbeispiel wird das Bohrmesser im gespannten Zustand des Schraubbolzens 3 durch eine erste Spannkraftkomponente gegen die Grundfläche 9 des Klemmschlitzes 4 und durch eine zweite Spannkraftkomponente mit der einen Seitenfläche 20 des Zentrierschlitzes 18 gegen die eine Seite des Zentrierstiftes 11 gedrückt. Durch den schrägen Verlauf des Zentrierschlitzes 18 in Verbindung mit der zur Klemmfläche 7 senkrechten Anordnung des Zentrierstiftes 11 und seiner zylindrischen Form wird beim Spannen des Schraubbolzens 3 eine zusätzliche axiale Spannkraftkomponente auf das Bohrmesser 2 in Richtung auf die Grundfläche 17 ausgeübt. Darüber hinaus hintergreift die Seitenfläche 20 den Zentrierstift 11 geringfügig, so daß der Zentrierstift 11 auch einen zusätzlichen axialen Halt für das Bohrmesser 2 gegen ein axiales Herausziehen aus dem Klemmschlitz 4 bietet. Sodann braucht der Schraubbolzen 3 zum Auswechseln des Bohrmessers 2 nicht vollständig aus der Gewindebohrung 12 herausgeschraubt zu werden. Auch das Spannen eines zweiten Schraubbolzens 3 und die Ausbildung einer zweiten Gewindebohrung 12 entfallen.

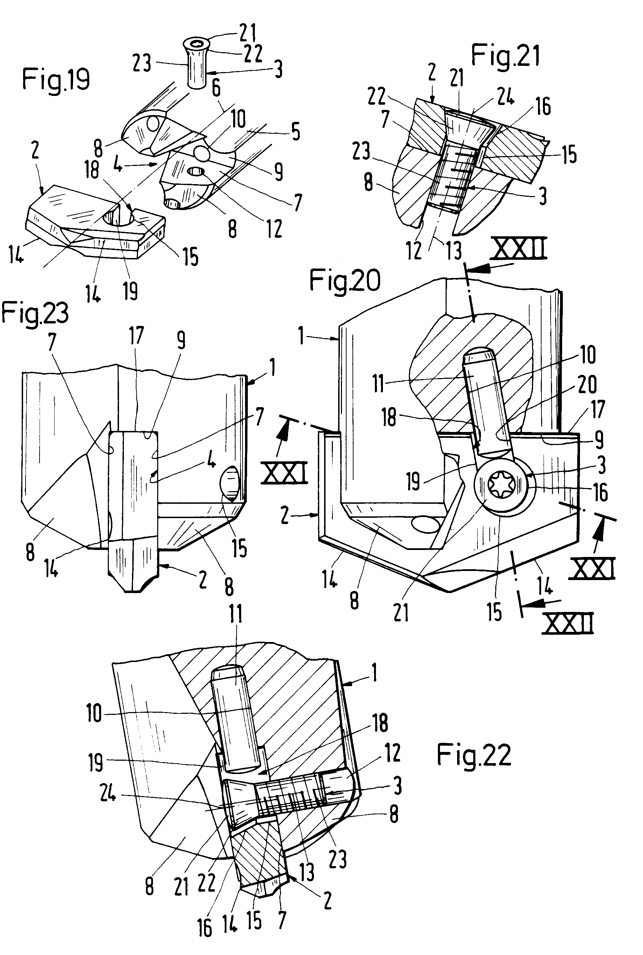

Das fünfte Ausführungsbeispiel nach den Fig. 19 bis 23 unterscheidet sich von dem vierten Ausführungsbeispiel nach den Fig. 14 bis 18 nur dadurch, daß die der Aufnahme des Zentrierstiftes 11 dienende Bohrung 10 unter dem gleichen Winkel schräg zur Drehachse verläuft wie der Zentrierschlitz 18. Die Wirkungsweise ist daher praktisch die gleiche wie die des vierten Ausführungsbeispiels.

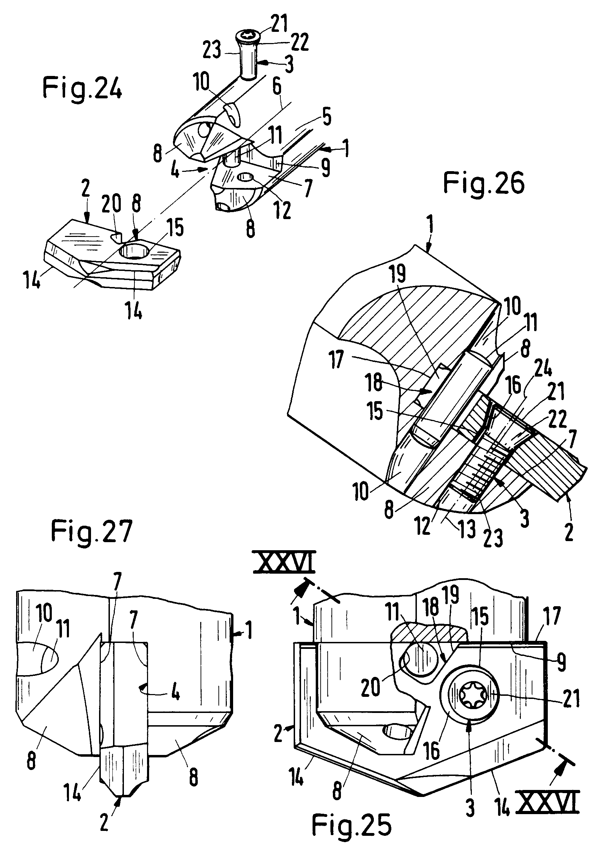

Das sechste Ausführungsbeispiel nach den Fig. 24 bis 27 unterscheidet sich von dem fünften Ausführungsbeispiel nach den Fig. 19 bis 23 zum einen dadurch, daß der Zentrierstift 11 den Klemmschlitz 4 und den Zentrierschlitz 18 durchsetzt und mit beiden Enden in Bohrungen 10 der Klemmschlitzschenkel 8 eingreift. Auch hier schließt der Zentrierschlitz 18 mit der Drehachse 6 auf der der Bohrmesserspitze zugekehrten Seite einen spitzen Winkel ein. Dagegen ist die an der Seitenfläche 20 des Zentrierschlitzes 18 anliegende Seite des Zentrierstiftes 11 von dem Schraubbolzen 3 abgekehrt und die Versetzung der Mittelachsen 13 und 24 in entgegengesetzter Richtung zu der Versetzung bei dem fünften Ausführungsbeispiel gewählt. Auch bei diesem sechsten Ausführungsbeispiel wird aufgrund des schrägen Verlaufs des Klemmschlitzes 18 und der mit der dem Schraubbolzen 3 abgekehrten Seite des Zentrierstiftes 11 zusammenwirkenden Seitenfläche 20 des Klemmschlitzes 18 das Bohrmesser 2 im gespannten Zustand des Schraubbolzens 3 durch eine erste Spannkraftkomponente gegen die Grundfläche 9 des Klemmschlitzes 4 und durch eine zweite Spannkraftkomponente mit der einen Seitenfläche 20 des Zentrierschlitzes 18 gegen die eine Seite des Zentrierstiftes 11 gedrückt.

## Patentansprüche

1. Bohrwerkzeug für metallische Werkstoffe, mit einem Halter (1), der einen axialen Klemmschlitz (4) aufweist, in den ein plattenförmiges Bohrmesser (2) an der Grundfläche (9) des Klemmschlitzes (4) anliegend eingesetzt ist und mittels wenigstens eines mit einem Kopf (21) versehenen Schraubbolzens (3), der in eine Bohrung (15) im Bohrmesser (2) und in eine Bohrung (12) in einem Klemmschlitzschenkel (8) eingreift, gegen die Klemmschlitzschenkel (8) verklemmt ist, wobei die Mittelachse (13) der Bohrung (12) im Klemmschlitzschenkel (8) gegenüber der Mittelachse (24) der Bohrung (15) des Bohrmessers (2) versetzt ist und wenigstens einer von zwei einander zugekehrten Umfangsrändern (16, 22) des Schraubbolzens (3) und der Bohrmesser-Bohrung (12) abgeschrägt ist, und mit einem im Halter (1) eingesetzten Zentrierstift (11; 11a), der in einen Zentrierschlitz (18) in der an der Grundfläche (9) des Klemmschlitzes (4) anliegenden Seite (17) des Bohrmessers (2) eingreift, um das Bohrmesser (2) in bezug auf die Drehachse (6) des Halters (1) zu zentrieren, **dadurch gekennzeichnet,** daß die Nennbreite des Zentrierschlitzes (18) größer als die des in den Zentrierschlitz (18) eingreifenden Abschnitts des Zentrierstiftes (11; 11a) gewählt ist und daß die Richtung und Größe der Versetzung der Mittelachsen (13, 24) von Bohrmesser-Bohrung (15) und Klemmschlitzschenkel-Bohrung (12) so gewählt sind, daß im gespannten Zustand des Schraubbolzens (3) nur die eine Seitenfläche (20) des Zentrierschlitzes (18) in der zentrierten Lage des Bohrmessers (2) an der einen Seite des Zentrierstiftes (11; 11a) anliegt.

2. Bohrwerkzeug nach Anspruch 1, dadurch gekennzeichnet, daß sich der Zentrierschlitz (18) in Richtung der oder schräg zur Drehachse (6) des Halters (1) erstreckt und die Richtung der Versetzung so gewählt ist, daß das Bohrmesser (2) im gespannten Zustand des Schraubbolzens (3) durch eine erste Spannkraftkomponente gegen die Grundfläche (9) des Klemmschlitzes (4) und durch eine zweite Spannkraftkomponente mit der einen Seitenfläche (20) des Zentrierschlitzes (18) gegen die eine Seite des Zentrierstiftes (11; 11a) gedrückt wird.

3. Bohrwerkzeug nach Anspruch 1 oder 2, dadurch gekennzeichnet, daß die aneinander anliegenden Seitenflächen (20, 25) von Zentrierschlitz (18) und Zentrierstift (11a) eben sind.

4. Bohrwerkzeug nach einem der Ansprüche 1 bis 3, dadurch gekennzeichnet, daß der Zentrierstift (11) den Klemmschlitz und den Zentrierschlitz (18) durchsetzt und mit beiden Enden in Bohrungen (10) der Klemmschlitzschenkel (8) eingreift.

## Claims

1. Drilling tool for metallic materials, comprising a holder (1) having an axial clamping slot (4) in which a plate-shaped drilling blade (2) is inserted to bear against the base surface (9) of the clamping slot (4) and is clamped against a limb (8) of the clamping slot by means of a threaded pin (3), which is provided with a head (21) and which engages in a bore (15) in the drilling blade (2) and in a bore (12) in said limb (8) of the clamping slot, wherein the centre axis (13) of the bore (12) in said limb (8) of the clamping slot is offset relative to the center axis (24) of the bore (15) of the drilling blade (2) and at least one of two mutuallyfacing circumferential edges (16, 22) of the head (21) of the threades pin (3) and the bore (15) of the drilling blade is bevelled, and further comprising a centering pin (11; 11a) which is inserted in the holder (1) and engages in a centering slot (18) in that side (17) of the drilling blade (2), which is contacting the base surface (9) of the clamping slot (4), so as to center the drilling blade (2) with respect to the rotational axis (6) of the holder (1), characterised in that the nominal width of the centering slot (18) is selected to be greater than that of the portion of the centering pin (11; 11a) engaging in the centering slot (18) and that the direction and amount of the offset of the central axes (13, 24) of the bore (15) of the drilling blade and bore (12) of the limb of the clamping slot are so selected that in the tightened state of the threaded pin (3) only one side face (20) of the centering slot (18) bears on one side of the centering pin (11; 11a) in the centered position of the drilling blade (2).

2. Drilling tool according to claim 1, characterised in that the centering slot (18) extends in the direction of or obliquely relative to the rotational axis (6) of the holder (1) and the direction of the offset is so selected that the drilling blade (2) in the tightened state of the threaded pin (3) is pressed against the base surface (9) of the clamping slot (4) by a first clamping force component and, at said one side face (20) of the centering slot (18), against said one side of the centering pin (11; 11a) by a second clamping force component.

3. Drilling tool according to claim 1 or 2, characterised in that the mutually adjacent side faces (20, 25) of the centering slot (18) and centering pin (11a) are flat.

4. Drilling tool according to one of claims 1 to 3, characterised thereby that the centering pin (11) passes through the clamping slot and the centering slot (18) and engages at both ends in bores (10) of the limb (8) of the clamping slot.

## Revendications

1. Outil d'alésage pour pièces métalliques, comportant un support (1), qui présente un canal de blocage axial (4), dans lequel une lame d'alésage (2) en forme de plaque s'appliquant sur la surface de base (9) du canal de blocage (4) est introduite et est bloquée, via au moins un boulon de vissage (3) pourvu d'une tête (21), qui s'engage dans un orifice (15) de la lame d'alésage (2) et dans un orifice (12) d'un branche (8) du canal de blocage, contre la branche (8) de la lame de blocage, l'axe (13) de l'orifice (12) de la branche (8) du canal de blocage étant décalé de l'axe (24) de l'orifice (15) de la lame d'alésage (2) et au moins un de deux bords périphériques (16, 22) tournés l'un vers l'autre du boulon de vissage (3) et de l'orifice (12) de la lame d'alésage étant biseauté, et comportant une broche de centrage (11; 11a) introduite dans le support (1), qui est engagée dans un canal de centrage (18) du côté (17) de la lame d'alésage (2) s'appliquant sur la surface de base (9) du canal de blocage (4) pour centrer la lame d'alésage (2) par rapport à l'axe de rotation (6) du support (1), caractérisé en ce que la largeur théorique du canal de centrage (18) est choisie supérieure à celle de la section de la broche de centrage (11; 11a) s'engageant dans le canal de centrage (18) et la direction et la grandeur du décalage des axes (13, 24) de l'orifice (15) de la lame d'alésage et de l'orifice (12) de la branche du canal de blocage sont choisis de telle sorte que, lorsque le boulon de vissage (3) est serré, seule la première face latérale (20) du canal de centrage (18) s'applique sur le premier côté de la broche de centrage (11; 11a) dans la position centrée de la lame d'alésage (2).

2. Outil d'alésage selon la revendication 1, caractérisé en ce que le canal de centrage (18) s'étend dans la direction de l'axe de rotation (6) du support (1) ou en inclinaison vis-à-vis de cet axe et la direction du décalage est choisie de telle sorte que la lame d'alésage (2) soit pressée, lorsque le boulon de vissage (3) est serré, par une première composante de la force de serrage contre la surface de base (9) du canal de blocage (4) et par une deuxième composante de la force de serrage avec la première face latérale (20) du canal de centrage (18) contre le premier côté de la broche de centrage (11; 11a).

3. Outil d'alésage selon la revendication 1 ou 2, caractérisé en ce que les faces latérales (20, 25), s'appliquant l'une sur l'autre, du canal de centrage (18) et de la broche de centrage (11a) sont lisses.

4. Outil d'alésage selon l'une quelconque des revendications 1 à 3, caractérisé en ce que la broche de centrage (11) traverse le canal de blocage et le canal de centrage (18) et coopère avec les deux extrémités dans des orifices (10) de la branche (8) du canal de blocage.
